# FASCICULE DE BREVET EUROPEEN

(11) **EP 3 835 707 B1**
(45) Date de publication et mention de la délivrance du brevet: **02.11.2022**
(21) Numéro de dépôt: 20209122.9
(22) Date de dépôt: 23.11.2020
(51) Int. Cl.: F41A 23/18, B60R 7/14, F41B 5/14

(54) **SUPPORT POUR ARME INDIVIDUELLE**
HALTERUNG FÜR PERSÖNLICHE WAFFE
SUPPORT FOR INDIVIDUAL WEAPON

(30) Priorité: 11.12.2019 FR 1913995
(43) Date de publication de la demande: 16.06.2021
(73) Titulaire: NEXTER Systems, 78034 Versailles Cedex (FR)
(72) Inventeur: GOGUILLON, Vincent, 18023 Bourges (FR); DUINAT, Jean Luc, 18023 Bourges (FR)
(74) Mandataire: Cabinet Chaillot

(56) Documents cités:
- US-A- 3 700 147
- US-A1- 2003 042 283

## Description

Le domaine technique de l'invention est celui des supports pour les armes individuelles de type fusil qui sont embarquées à bord de véhicules militaires.

Il est connu de longue date de fixer les armes des fantassins à bord des véhicules militaires pour assurer la protection et l'accès à ces armes tout en maintenant la sécurité des personnels et en rationalisant le rangement à bord des véhicules.

Le brevet US2018/0170268 décrit un support pour arme individuelle comportant un sabot pivotant autour d'un axe transversal. Le sabot est destiné à recevoir l'arrière de la crosse d'une arme. Lorsque le sabot est basculé vers l'avant autour de l'axe, l'utilisateur peut mettre en place l'arme dans le sabot. En faisant pivoter l'arme située dans le sabot jusqu'à la verticale, le canon de l'arme est amené dans un collier verrouillable électriquement qui maintient alors l'arme verticalement le long d'un mat. Pour retirer l'arme du support, l'utilisateur doit déverrouiller le collier et basculer l'arme vers l'avant.

Un tel dispositif est complexe du fait de l'équipement électrique nécessaire, qui est susceptible de pannes. En outre ce dispositif semble peu adapté à d'autres orientations de stockage de l'arme que la verticale.

Le brevet US3700147 divulgue un support pour arme individuelle comportant un sabot destiné à contenir la crosse de l'arme. Ce sabot est monté pivotant par rapport à un support vis-à-vis duquel il est rappelé en position par un moyen élastique. Une butée de forme indéfinie permet d'arrêter le mouvement de pivot de l'arme entrainée par le sabot.

La demande de brevet US2003/042283 décrit un support pour un outil, un arc ou un fusil, support comportant une paire d'étriers qui sont destinés à recevoir chacun une branche de l'outil ou de l'arc. Les étriers sont montés pivotant par rapport à un support auquel ils sont chacun reliés par un moyen élastique exerçant un couple de pivotement autour d'un axe perpendiculaire au support.

Aucun de ces dispositifs n'assure un maintien simple et fiable d'une arme sur un support pouvant adopter plusieurs orientations.

L'invention propose un support de conception simple et fiable, support pouvant par ailleurs être mis en œuvre d'une seule main et pouvant être positionné suivant différentes orientations, en particulier sur un plan proche de l'horizontale.

Ainsi, l'invention a pour objet un support pour arme individuelle qui est destiné à être rendu solidaire d'une surface, support comportant, d'une part un étrier comportant au moins deux zones d'appui entre lesquelles l'arme est destinée à être placée, étrier qui est destiné à être rendu solidaire de la surface grâce à un axe de pivot, le support comportant un moyen de rappel élastique qui applique un couple faisant pivoter l'étrier par rapport à la surface et autour de l'axe de pivot, les zones d'appui pouvant alors transmettre le couple à l'arme, support comportant d'autre part une butée destinée à être rendue solidaire de la surface et disposée à distance de l'étrier, butée pouvant arrêter le pivotement de l'arme lorsqu'elle est soumise au couple transmis par les zones d'appui de l'étrier, la butée comportant un ergot positionné de manière à s'opposer au retrait de l'arme par translation selon une direction parallèle à l'axe de pivot, la butée et son ergot formant un crochet qui est orienté de manière telle que l'arme soit poussée par le couple communiqué par l'étrier vers le fond du crochet, le crochet comportant un plan incliné ayant pour effet d'écarter l'arme à distance de la surface sous l'effet du couple communiqué par l'étrier.

Avantageusement, chaque zone d'appui de l'étrier pourra également comporter un ergot positionné de manière à s'opposer au retrait de l'arme par translation selon une direction parallèle à l'axe de pivot.

Selon un mode de réalisation, le support pourra comporter une platine solidaire de l'étrier pivotant, platine comportant un arrêtoir destiné à interférer avec une crosse de l'arme pour en arrêter le glissement longitudinal en direction de l'arrêtoir.

Avantageusement, la platine pourra comporter un sabot formant l'arrêtoir, sabot délimitant un logement qui sera destiné à recevoir la crosse de l'arme pour limiter les mouvements transversaux de celle-ci.

Selon un mode de réalisation, le support pourra comporter une plaque fixe qui sera destinée à être rendue solidaire de la surface, plaque comportant une face d'appui qui sera destinée à interférer avec une crosse de l'arme pour en arrêter le glissement longitudinal en direction de la face d'appui.

Avantageusement, la plaque fixe pourra comporter un rebord au niveau de sa face d'appui, rebord qui sera destiné à interférer avec la crosse de l'arme pour en bloquer les mouvements selon une direction parallèle à l'axe de pivot.

L'invention sera mieux comprise à la lecture de la description suivante, description faite au regard des dessins annexés dans lesquels :

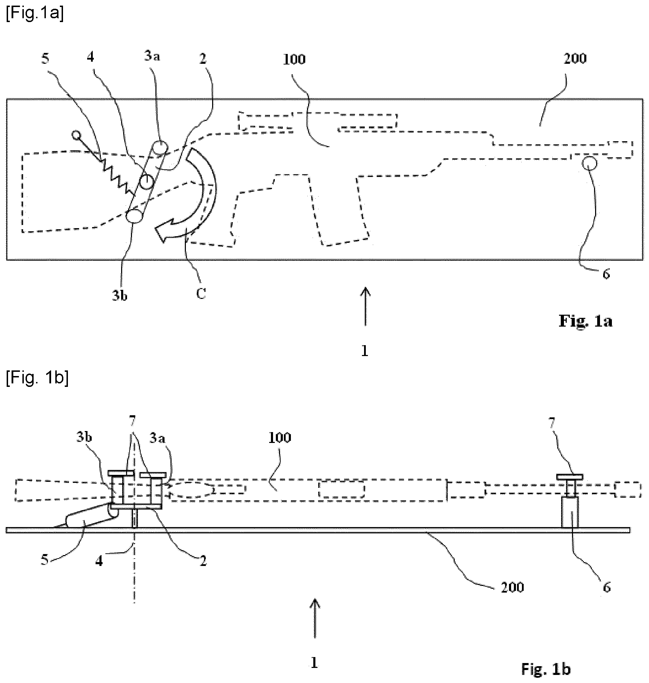

[Fig 1a] représente une vue de dessus d'un dispositif selon un premier mode de réalisation de l'invention.
[Fig 1b] représente une vue de côté du dispositif selon ce premier mode de réalisation.
[Fig 2a] représente une vue de dessus d'un dispositif selon un deuxième mode de réalisation de l'invention.
[Fig 2b] représente une vue de côté du dispositif selon ce deuxième mode de réalisation.
[Fig 3a] représente une vue de dessus d'un dispositif selon un troisième mode de réalisation de l'invention.
[Fig 3b] représente une vue de côté du dispositif selon ce troisième mode de réalisation.
[Fig 4] représente une vue de face d'un crochet pouvant être utilisé dans les différents modes de réalisation.

Selon les figures la et 1b, un support 1 pour une arme individuelle longue 100, de type fusil automatique, est fixé à une surface 200 qui est ici horizontale. La surface pourra être par exemple une surface externe d'un véhicule au voisinage d'un trou d'homme. Le support 1 permet alors de positionner l'arme à proximité d'un observateur sortant son torse par le trou d'homme.

Le support 1 comporte un étrier 2 qui comporte deux montants 3a et 3b, qui sont ici des tiges orientées perpendiculairement à la surface 200, et qui forment des zones d'appui 3a et 3b, situées de part et d'autre de l'arme 100, préférentiellement au niveau de la crosse. A mi-distance de chaque zone d'appui 3a et 3b se trouve un axe de pivot 4 qui solidarise l'étrier 2 avec la surface 200, permettant ainsi à l'étrier 2 de pouvoir pivoter relativement à la surface 200. L'axe de pivot 4 est perpendiculaire à la surface 200.

Le support 1 comporte aussi un moyen de rappel élastique 5 qui est fixé de façon à exercer un effort entre l'étrier 2 et la surface 200 de façon à produire un couple de pivotement C autour de l'axe de pivot 4. Ce couple C tend à faire pivoter l'arme 100 autour de l'axe de pivot 4 mais celle-ci est arrêtée en rotation dans le sens du couple C par une butée 6 du support 1 qui est située à distance de l'étrier 2 et qui interfère avec une partie avant de l'arme 100, préférentiellement le canon.

L'arme est ainsi maintenue dans un plan P qui est parallèle à la surface 200.

La saisie de l'arme 200 est aisée puisque rien ne gêne son retrait suivant une direction parallèle à l'axe de pivot 4 et ce retrait peut se faire avec une main seulement.

On notera que si la surface 200 est présentée horizontale, elle pourrait également être inclinée de façon permanente ou ponctuelle dans le cas de sollicitations de transport de l'arme dans un véhicule par exemple.

L'Homme du Métier prendra soin de dimensionner l'effort produit par le moyen élastique 5 en tenant compte des contraintes générées par l'inclinaison de la surface 200 sur laquelle est fixé le dispositif 1.

Si l'on souhaite également sécuriser le retrait de l'arme 100 contre des mouvements indésirables parallèles à l'axe 4, les extrémités des zones d'appui 3a et 3b et de la butée 6 pourront comporter des ergots 7 qui viendront en partie au-dessus de l'arme 100. Dans ce cas, le retrait de l'arme 100 se fera toujours à une main mais en faisant au préalable pivoter l'arme contre le couple C, ce qui permettra d'éloigner l'avant de l'arme de la butée 6 et de le dégager de l'ergot 7.

En levant l'extrémité avant de l'arme 100, celle-ci pourra échapper à l'ergot 7 de la butée 6. On accompagne ensuite l'arme dans un mouvement de pivotement selon la direction imprimée par l'étrier 2 jusqu'à ce que les butées 3a et 3b n'exercent plus d'effort sur la crosse, ce qui permet le retrait de la partie arrière de l'arme de l'étrier 2.

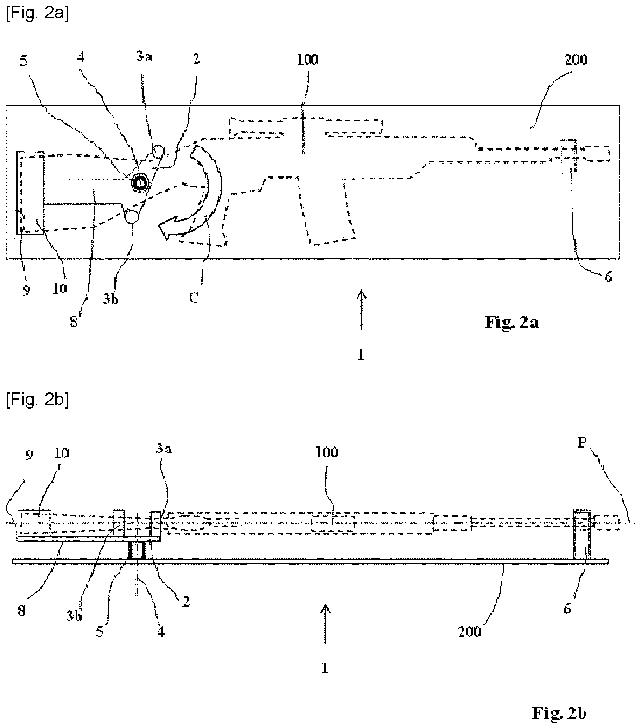

Les figures 2a et 2b montrent un deuxième mode de réalisation dans lequel le support 1 comporte une platine 8 solidaire de l'étrier pivotant 2. La platine 8 s'étend jusqu'à l'arrière de la crosse de l'arme 10 et comporte un arrêtoir 9 qui comporte ici un sabot 10 entourant l'arrière de la crosse. L'arrêtoir 9 a pour fonction de bloquer les mouvements longitudinaux de l'arme 100 en direction de l'arrière AR, vers l'arrêtoir 9. Le sabot 10 permet, lors de la mise en place de l'arme sur le support 1, d'aligner celle-ci entre les zones d'appui 3a et 3b de l'étrier. Le sabot 10 délimite un logement qui est destiné à recevoir la crosse de l'arme et qui permet de limiter les mouvements transversaux de celle-ci. On évite ainsi les mouvements transversaux parallèles à la surface 200 mais aussi les mouvements transversaux selon une direction parallèle à l'axe de pivot 4.

On note que, la platine 8 étant liée à l'étrier 2, celle-ci accompagne les mouvements de rotation de l'étrier 2, favorisant une mise en place aisée de l'arme 100 dans l'étrier 2.

Le moyen élastique 5 comporte ici un ressort hélicoïdal 5 entourant l'axe 4.

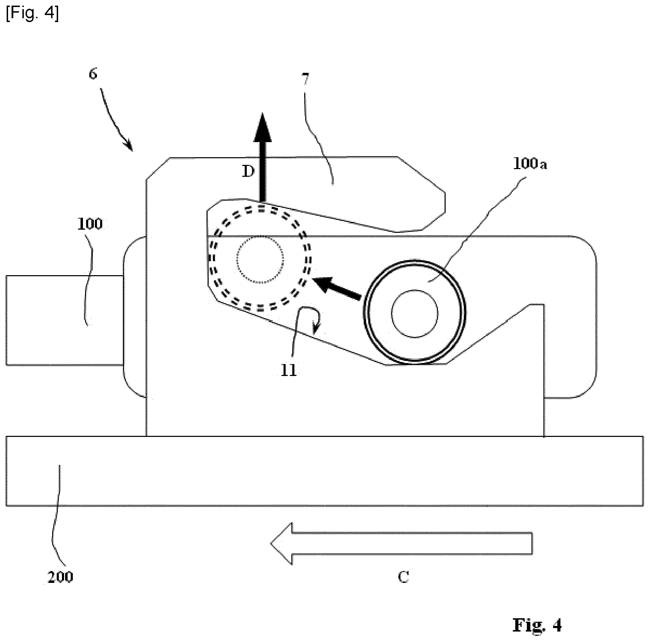

Le pivotement de l'arme 100 sous l'influence du couple C est, selon ce mode de réalisation, arrêté par une butée 6 qui comporte une forme en crochet qui sera détaillée plus loin en référence à la figure 4.

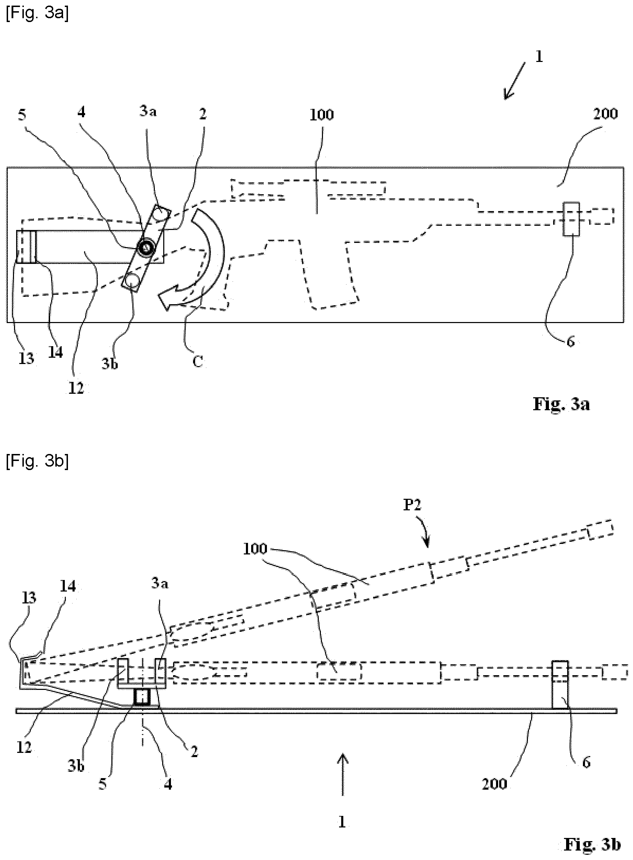

Les figures 3a et 3b montrent un troisième mode de réalisation de l'invention dans lequel le support 1 comporte une plaque fixe 12 qui est rendue solidaire de la surface 200 selon des moyens classiquement connus de l'Homme du Métier, par exemple des vis. On assure ainsi une fixation robuste du support 1 avec la surface 200.

La plaque fixe 12 comporte aussi une face d'appui 13 destinée à arrêter le glissement longitudinal de l'arme 100 vers l'arrière AR, en direction de la face d'appui 13. La plaque fixe 12 comporte enfin un rebord 14 au niveau de sa face d'appui, rebord qui est destiné à retenir la crosse contre les mouvements parallèles à l'axe de pivot 4.

La plaque fixe 12 ne tourne pas autour de l'axe 4 mais elle n'entrave pas la rotation de l'arme autour de l'axe de pivot 4 lorsqu'elle est libérée de l'emprise des zones d'appui 3a et 3b comme représenté sur la figure 3b par la silhouette en position inclinée P2, ce qui permet une retrait extrêmement rapide de l'arme 100 depuis le support 1.

Là aussi, le pivotement de l'arme 100 sous l'influence du couple C communiqué par l'étrier 2 est arrêté par une butée 6 qui a une forme de crochet.

Cette forme de crochet est mieux vue à la figure 4. L'arme 100 est vue en bout par son extrémité avant. La butée 6 comporte une forme en crochet dont la partie supérieure joue le rôle d'un ergot 7 s'opposant au retrait vertical de l'arme 100. On note que la butée en crochet 6 comporte un plan incliné 11 qui est orienté de manière telle que, lorsque l'arme 100 est entraînée par l'étrier 2, le canon de l'arme 100 tend à gravir le plan incliné 11 et s'élève dans une direction D qui l'écarte de la surface 200 et vient le pousser au fond du crochet 6. L'arme est ainsi maintenue en position de manière sûre contre un retrait accidentel. Lorsque la surface 200 est horizontale, cet écartement du canon se fait contre l'effet du poids de l'arme.

On note que, lorsque le dispositif comporte des moyens permettant d'empêcher les mouvements de l'arme 100 selon la direction de l'axe de pivot 4, alors il peut être installé sur des surfaces 200 présentant diverses orientations comme par exemple verticalement ou même au niveau d'un plafond du véhicule sans crainte de décrochement de l'arme.

## Revendications

1. Support (1) pour arme individuelle (100) destiné à être rendu solidaire d'une surface (200), support (1) comportant, d'une part un étrier (2) comportant au moins deux zones d'appui (3a,3b) entre lesquelles l'arme (100) est destinée à être placée, étrier (2) qui est destiné à être rendu solidaire de la surface (200) grâce à un axe de pivot (4), le support (1) comportant un moyen de rappel (5) élastique qui applique un couple faisant pivoter l'étrier (2) par rapport à la surface (200) et autour de l'axe de pivot (4), les zones d'appui (3a,3b) pouvant alors transmettre le couple à l'arme (100), support (1) comportant d'autre part une butée (6) destinée à être rendue solidaire de la surface (200) et disposée à distance de l'étrier (2), butée (6) pouvant arrêter le pivotement de l'arme (100) lorsqu'elle est soumise au couple transmis par les zones d'appui (3a, 3b) de l'étrier (2), la butée (6) comportant un ergot (7) positionné de manière à s'opposer au retrait de l'arme (100) par translation selon une direction parallèle à l'axe de pivot (4), la butée (6) et son ergot (7) formant un crochet (6) qui est orienté de manière telle que l'arme (100) soit poussée par le couple communiqué par l'étrier (2) vers le fond du crochet (6), le crochet (6) comportant un plan incliné (11) ayant pour effet d'écarter l'arme (100) à distance de la surface (200) sous l'effet du couple communiqué par l'étrier (2).

2. Support (1) pour arme individuelle (100) selon la revendication 1, **caractérisé en ce que** chaque zone d'appui (3a, 3b) de l'étrier (2) comporte un ergot (7) positionné de manière à s'opposer au retrait de l'arme (100) par translation selon une direction parallèle à l'axe de pivot (4) .

3. Support (1) pour arme (100) selon la revendication 1, **caractérisé en ce qu'**il comporte une platine (8) solidaire de l'étrier (2) pivotant, platine (8) comportant un arrêtoir (9) destiné à interférer avec une crosse de l'arme (100) pour en arrêter le glissement longitudinal en direction de l'arrêtoir (9).

4. Support (1) pour arme (100) selon la revendication 3, **caractérisé en ce que** la platine (8) comporte un sabot (10) formant l'arrêtoir (9), sabot (10) délimitant un logement qui est destiné à recevoir la crosse de l'arme (100) pour limiter les mouvements transversaux de celle-ci.

5. Support (1) pour arme (100) selon la revendication 1, **caractérisé en ce qu'**il comporte une plaque fixe (12) qui est destinée à être rendue solidaire de la surface (200), plaque (12) comportant une face d'appui (13) qui est destinée à interférer avec une crosse de l'arme (100) pour en arrêter le glissement longitudinal en direction de la face (13) d'appui.

6. Support (1) pour arme (100) selon la revendication 5, **caractérisé en ce que** la plaque fixe (13) comporte un rebord (14) au niveau de sa face d'appui (13), rebord (14) qui est destiné à interférer avec la crosse de l'arme (100) pour en bloquer les mouvements selon une direction parallèle à l'axe de pivot (4).

## Patentansprüche

1. - Halterung (1) für eine persönliche Waffe (100), die bestimmt ist, mit einer Oberfläche (200) fest verbunden zu werden, wobei die Halterung (1) zum einen einen Bügel (2) aufweist, der mindestens zwei Stützzonen (3a, 3b) aufweist, zwischen denen die Waffe (100) bestimmt ist, platziert zu sein, wobei der Bügel (2) bestimmt ist, mit der Oberfläche (200) dank einer Schwenkachse (4) fest verbunden zu werden, wobei die Halterung (1) ein elastisches Rückstellmittel (5) aufweist, das ein Moment ausübt, so dass der Bügel (2) im Verhältnis zur Oberfläche (200) und um die Schwenkachse (4) schwenkt, wobei die Stützzonen (3a, 3b) dann das Moment an die Waffe (100) übertragen können, wobei die Halterung (1) zum anderen einen Anschlag (6) aufweist, der bestimmt ist, mit der Oberfläche (200) fest verbunden zu sein und vom Bügel (2) beabstandet angeordnet ist, wobei der Anschlag (6) das Schwenken der Waffe (100) stoppen kann, wenn sie dem Moment ausgesetzt ist, das von den Stützzonen (3a, 3b) des Bügels (2) übertragen wird, wobei der Anschlag einen Vorsprung (7) aufweist, der derart positioniert ist, dass er dem Entfernen der Waffe (100) durch Translation gemäß einer Richtung parallel zur Schwenkachse (4) entgegenwirkt, wobei der Anschlag (6) und sein Vorsprung (7) einen Haken (6) bilden, der derart ausgerichtet ist, dass die Waffe (100) von dem von dem Bügel (2) übermittelten Moment zum Boden des Hakens (6) gedrückt wird, wobei der Haken (6) eine geneigte Ebene (11) aufweist, die bewirkt, dass die Waffe (100) unter der Wirkung des von dem Bügel (2) übermittelten Moments von der Oberfläche (200) beabstandet wird.

2. - Halterung (1) für eine persönliche Waffe (100) nach Anspruch 1, **dadurch gekennzeichnet, dass** jede Stützzone (3a, 3b) des Bügels (2) einen Vorsprung (7) aufweist, der derart positioniert ist, dass er dem Entfernen der Waffe (100) durch Translation gemäß einer Richtung parallel zur Schwenkachse (4) entgegenwirkt.

3. - Halterung (1) für eine Waffe (100) nach Anspruch 1, **dadurch gekennzeichnet, dass** sie eine Tragplatte (8) aufweist, die mit dem schwenkenden Bügel (2) fest verbunden ist, wobei die Tragplatte (8) einen Stopper (9) aufweist, der bestimmt ist, mit einem Kolben der Waffe (100) zu interferieren, um dessen längliches Gleiten in Richtung des Stoppers (9) zu stoppen.

4. - Halterung (1) für eine Waffe (100) nach Anspruch 3, **dadurch gekennzeichnet, dass** die Tragplatte (8) einen Klotz (10) aufweist, der den Stopper (9) bildet, wobei der Klotz (10) eine Aufnahme begrenzt, die zum Empfang des Kolbens der Waffe (100) bestimmt ist, um die transversalen Bewegungen desselben zu begrenzen.

5. - Halterung (1) für eine Waffe (100) nach Anspruch 1, **dadurch gekennzeichnet, dass** er eine feste Platte (12) aufweist, die bestimmt ist, auf der Oberfläche (200) fest befestigt zu werden, wobei die Platte (12) eine Stützfläche (13) aufweist, die bestimmt ist, mit einem Kolben der Waffe (100) zu interferieren, um dessen längliches Gleiten in Richtung der Stützfläche (13) zu stoppen.

6. - Halterung (1) für eine Waffe (100) nach Anspruch 5, **dadurch gekennzeichnet, dass** die feste Platte (13) einen Rand (14) im Bereich ihrer Stützfläche (13) aufweist, wobei der Rand (14) bestimmt ist, mit dem Kolben der Waffe (100) zu interferieren, um dessen Bewegungen gemäß einer Richtung parallel zur Schwenkachse (4) zu blockieren.

## Claims

1. - Support (1) for an individual weapon (100), intended to be secured to a surface (200), the support (1) comprising, on the one hand, a stirrup (2) comprising at least two bearing areas (3a, 3b) between which the weapon (100) is intended to be placed, the stirrup (2) being intended to be secured to the surface (200) by means of a pivot pin (4), the support (1) comprising an elastic return means (5) which applies a torque for pivoting the stirrup (2) relative to the surface (200) and about the pivot pin (4), the bearing areas (3a, 3b) then being able to transmit the torque to the weapon (100), the support (1) comprising on the other hand a stop (6) intended to be secured to the surface (200) and arranged at a distance from the stirrup (2), the stop (6) being able to stop the pivoting of the weapon (100) when it is subjected to the torque transmitted by the bearing areas (3a, 3b) of the stirrup (2), the stop (6) comprising a lug (7) positioned so as to oppose the removal of the weapon (100) by translation in a direction parallel to the pivot pin (4), the stop (6) and its lug (7) forming a hook (6) that is oriented in such a way that the weapon (100) is pushed towards the bottom of the hook (6) by the torque imparted by the stirrup (2), the hook (6) comprising an inclined plane (11) having the effect of moving the weapon (100) away from the surface (200) under the effect of the torque imparted by the stirrup (2).

2. - The support (1) for an individual weapon (100) according to claim 1, **characterised in that** each bearing area (3a, 3b) of the stirrup (2) comprises a lug (7) positioned so as to oppose the removal of the weapon (100) by translation in a direction parallel to the pivot pin (4).

3. - The support (1) for a weapon (100) according to claim 1, **characterised in that** it comprises a plate (8) secured to the pivoting stirrup (2), the plate (8) comprising a retainer (9) intended to interfere with a stock of the weapon (100) in order to stop its longitudinal sliding in the direction of the retainer (9).

4. - The support (1) for a weapon (100) according to claim 3, **characterised in that** the plate (8) comprises a shoe (10) forming the retainer (9), the shoe (10) delimiting a housing that is intended to receive the stock of the weapon (100) in order to limit the transverse movements of the latter.

5. - The support (1) for a weapon (100) according to claim 1, **characterised in that** it comprises a fixed plate (12) that is intended to be secured to the surface (200), the plate (12) comprising a bearing face (13) that is intended to interfere with a stock of the weapon (100) in order to stop the longitudinal sliding thereof in the direction of the bearing face (13).

6. - The support (1) for a weapon (100) according to claim 5, **characterised in that** the fixed plate (13) comprises a rim (14) at its bearing face (13), the rim (14) being intended to interfere with the stock of the weapon (100) to block its movements in a direction parallel to the pivot pin (4).
